# EUROPEAN PATENT APPLICATION

(11) **EP 1 429 237 A2**
(43) Date of publication of application: **16.06.2004**
(21) Application number: 03257270.3
(22) Date of filing: 18.11.2003
(51) Int. Cl.: G06F 3/033

(54) **System for displaying multiple images with indication of the read direction**

(30) Priority: 13.12.2002 KR 2002079697
(71) Applicant: SAMSUNG ELECTRONICS CO., LTD., Suwon-City, Kyungki-do (KR)
(72) Inventor: Kim, Myeong-bo, Suwon-city Gyunggi-do (KR)
(74) Representative: Geary, Stuart Lloyd

(57) **Abstract**

A digital image device is provided that displays one or more digital images, as well as adaptively displays an icon proximally to a selected image in accordance with manipulation of a direction key by a user when selecting which digital image(s) to display. The icon indicates not only a current position or active image but also the moving direction of desired image review. The icon can be stored as separate forward and backward direction icons that are selected as needed, or a single direction icon that is rotated as needed, depending on whether the user selected the next or a previous one of sequential images for display. When the digital image device displays multiple images simultaneously, the icon is moved from a selected image to the next selected image, and the direction the icon changed depending on image review direction.

## Description

A first aspect of the invention relates to a device for generating digital images, comprising:
at least one memory device for storing digital images and at least one direction icon;
a user input device for receiving commands to retrieve selected ones of the digital images from said memory device for display;
a display device for displaying digital images; and
a processing device connected to said memory device, said user input device and said display device,
the processing device being programmed to control the retrieval of at least one of the digital images and said direction icon from said memory device for display via said display device in response a command, to control the sequential display of the digital images in said memory device on said display device, and to configure the display of said icon to move to the next digital image in the sequence.

A second aspect of the invention relates to a method of controlling the display of digital images on a display of a device operable to provide a sequential display of digital images, the method comprising the steps of:
receiving a first user command to select and display an image;
displaying said first image on the display screen;
displaying an icon proximally to said first image on the display screen to indicate that said image is the selected image; and
receiving a second user command to select a second image in the sequence.

A digital camera is a digital image device for recording and replaying a captured image of an object. One example is a digital still camera (DSC), usually used for capturing still images. Since the capacity of recording media used with DSCs is small, they are usually used for still images, although they may be able to capture a series of images.

A DSC photographs still images of an object through an operation of a shutter. Photographed still images may be divided and recorded in several pieces according to the capacity of a recording medium. Also, the recorded still images are displayed on a display device such as LCD (Liquid Crystal Display) so that a user can confirm photographing conditions.

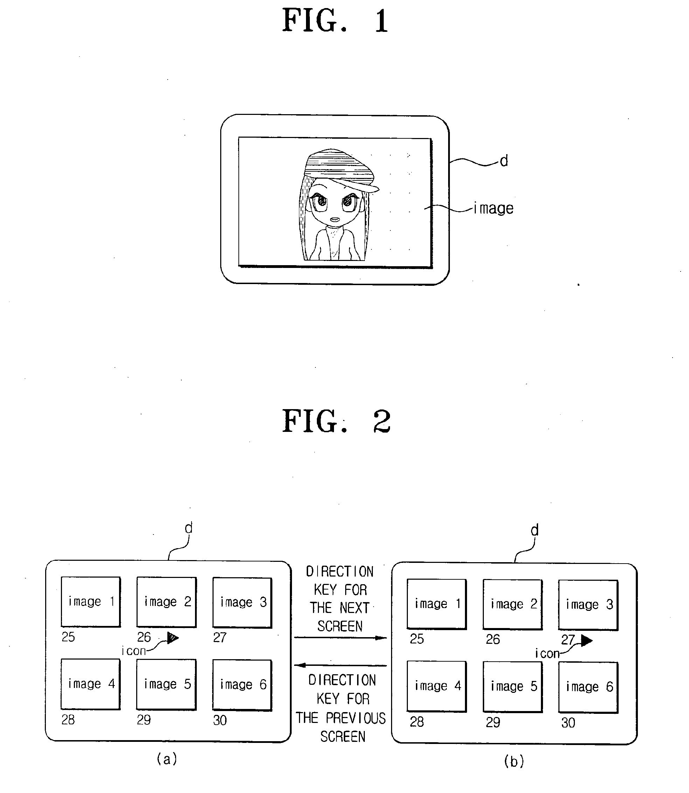

Figure 1 illustrates an exemplary image being displayed on the entire surface of a display unit equipped in a conventional DSC. Figure 2 illustrates a plurality of images being displayed on an entire surface of a display unit equipped in a conventional DSC.

When a still image recorded on a recording medium, i.e., which can be termed the image information of an object, is displayed on a display unit (d) of a DSC, the DSC displays only one image on the entire surface of the display unit (d), as shown in Figure 1, or displays a plurality of images (e.g., image 1 to image 6) by dividing the surface of the display unit (d) into a plurality of picture planes, as shown in Figure 2(a), when needed. When a plurality of images are displayed on a multi-screen, as shown in Figure 2(a), a user can more readily confirm photographing conditions of the taken images.

Here, an icon to indicate a direction is displayed beneath any one of the plurality of images (image 1 to image 6). The icon is a kind of a cursor moving between images (image 1 to image 6) by manipulation of a direction key of the DSC to inform a user of a location of the present image information.

For example, when a direction key (not shown) is manipulated in order to display the next image information in Figure 2(a), the icon moves from beneath the present image displayed (as image 2) to beneath the next image displayed (as image 3) to show the location of the next image information. Here, a user can determine the location and moving direction of the icon by examining the icon itself.

On the other hand, when a direction key (not shown) is manipulated to display the previous image, e.g. the image before the image 3 in the state shown in Figure 2(b), the icon moves beneath the image displayed as image 2, as shown in Figure 2(a). However, this poses an inconvenience to the user, since the location of the icon is shown with the icon itself but the moving direction of the icon is not shown. That is, the user may not able to ascertain the heading direction of the present icon, since the direction of the icon is displayed in the same direction regardless of whether the movement is forwards or backwards.

The first aspect of the invention is characterised in that the processing device is programmed to indicate one of a forward direction and a backward direction depending on whether said command selected the next digital image or the previous digital image, respectively, in the sequential display of the digital images.

The second aspect of the invention is characterised by displaying said icon proximally to said second image that indicates a forward direction or a backward direction depending on whether said second user command selects the next image or the previous image in the sequence.

Embodiments of the present invention will now be described with reference to the accompanying drawings, in which:
Figure 1 is a view illustrating a case where a single image is displayed over an entire surface of the displaying apparatus in a conventional digital still camera;
Figure 2 is a view illustrating a case where a plurality of images are displayed over the surface of the displaying apparatus in the conventional digital camera;
Figure 3 is a block diagram illustrating components of a digital still camera according to the present invention;
Figure 4 is a view illustrating a plurality of images displayed on a display unit forming part of the Figure 3 camera; and
Figure 5 is flowchart illustrating a method of controlling a screen display carried out by the digital still camera Figure 3.

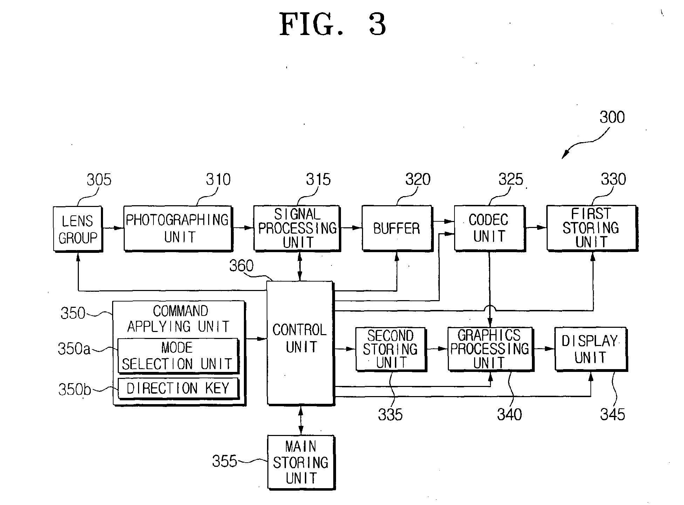

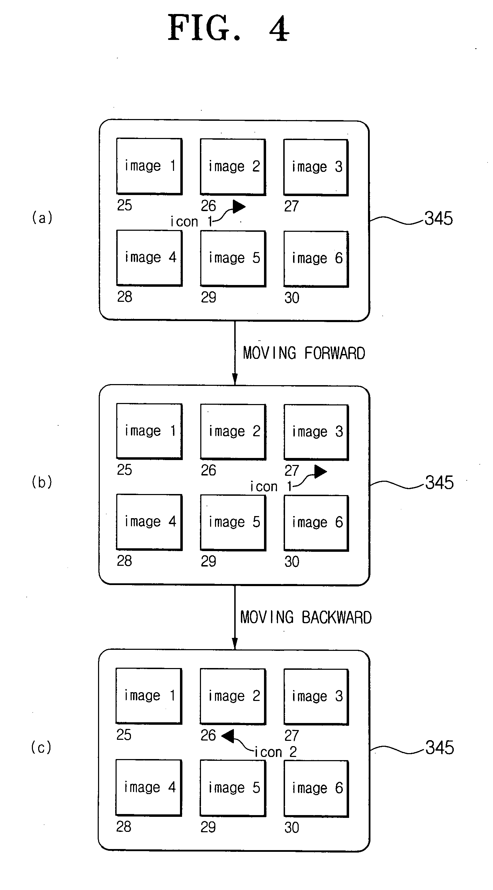

Figure 3 is a block diagram illustrating a digital still camera (DSC) according to a preferred embodiment of the present invention. Figure 4 is a view illustrating a case where a plurality of image information are displayed on a display unit in Figure 3.

Figure 3 is a block diagram of DSC comprising components for illustrating realisation of multi-screen operation in accordance with the present invention. The block diagrams and descriptions illustrating the other functions and related functions of the DCS 300 will be omitted herein.

Referring to Figure 3 and 4, DSC 300 comprises a lens group 305, a photographing unit 310, a signal processing unit 315, a buffer 320, a codec unit 325, a first storing unit 330, a second storing unit 335, a graphic processing unit 340, a display unit 345, a command or order applying unit 350, a main storing unit 355, and a control unit 360.

The lens group 305 for photographing a still image of an object comprises at least one zoom lens (not shown) for magnifying or reducing the object, and at least one focus lens (not shown) for adjusting a focus in accordance with positions of the object and the zoom lens. The lens group 305 is moved by a driving unit (not shown) which is controlled by the control unit 360. The control unit 360 is described below.

The photographing unit 310 transforms a still image signal of the object passed through the lens group 305 to an electric image signal by means of a charge coupled device (not shown).

The signal processing unit 315 removes noise included in the electric image signal outputted from the photographing unit 310, and amplifies the result so that luminance of an image signal can be outputted on an even level.

The signal processing unit 315 transforms an analogue image signal transformed to an electric image signal to a digital image signal, and outputs automatic control data to the control unit 360 through digital processing. The automatic control data are for the automatic correction of focus, exposure, colour temperature and any operator hand tremors when using the DSC 300.

The buffer 320, which is a volatile memory such as SDRAM, is used by the control unit 360 to temporarily store information. In particular, the buffer 320 temporarily stores the transformed digital image signals. The temporarily stored digital image signals are either stored or deleted by a signal applied from the command applying unit 350, which is described below.

The codec unit 325 compresses the digital image signal outputted from the signal processing unit 315 using a compressing method, such as JPEG.

The first storing unit 330 is a place where the image signal compressed by the codec unit 325, i.e., image information, is stored. Preferably, a recording medium such as a flash memory or a memory stick is used for the first storing unit 330.

If a play command signal with respect to the image information is inputted upon selection of a display mode by the command applying unit 350, which is described below, the codec unit 325 releases compression of the image information stored in the first storing unit 330 under control of the control unit 360, and outputs the released image information to the graphics processing unit 340.

A forward direction icon (icon 1) and a backward direction icon (icon 2) to be displayed on the display unit 345 are stored in the second storing unit 335. For example, if multi-mode is selected by a mode selection unit 350a, which is described below, not only the plurality of image information but also the forward direction icon (icon 1) or the backward direction icon (icon 2) are displayed beneath a corresponding one of the plurality of image information.

The forward direction icon (icon 1) and the backward direction icon (icon 2), which are one of several different cursor types that can be used, indicate, by moving between the plurality of image information, the location of the image information which can be currently activated. The forward direction icon (icon 1) and the backward direction icon (icon 2) may be positioned proximally to any one of the upper, lower, left or right edges of the image information, and have a shape of an arrow or a triangle or other shape that can indicate moving directions. Also, the forward direction icon (icon 1) and the backward direction icon (icon 2) indicate opposite directions.

The graphics processing unit 340 generates the image information, which is stored in the first storing unit 330, and the forward direction icon (icon 1) or the backward direction icon (icon 2), which are stored in the second storing unit 330, as realisable image data in the display unit 345 as appropriate. In particular, if single mode or multi-mode is selected by the mode selection unit 350a of the command applying unit 350 that is described below, the graphics processing unit 340 synthesises the image information stored in the first storing unit 330 with the forward direction icon (icon 1) or the backward direction icon (icon 2), which is stored in the second storing unit 335, so as to generate the same as image data, which can be displayed.

Preferably, an LCD panel is used for the display unit 345, which is an apparatus for displaying image data generated through the graphic processing unit 340.

The command applying unit 350 is a user interface, which output a command to select or perform functions of the DSC 300 to the control unit 360. For that purpose, the command applying unit 350 comprises not only the mode selection unit 350a and the direction key 350b but also manipulation buttons (not shown) such as plurality of numeric keys and confirmation keys.

The mode selection unit 350a is used to select a screen display mode for displaying image information stored in the first storing unit 330. A single mode option and a multi-mode option are provided on the screen display mode.

The single mode is a mode for displaying a single image information through the entire screen of the display unit 345, and the multi-mode is a mode for displaying a plurality of image information by dividing the screen of the display unit 345. The number of screens divided in the multi-mode may be set by the user or may be preset in the course of manufacturing the DSC 300. The embodiment displays six different image information by dividing the screen into six, although this is not essential.

Also, if multi-mode is selected by the mode selection unit 350a, either one of the forward direction icon (icon 1) or the backward direction icon (icon 2) displayed on the display unit 345 together with a plurality of image information is adaptively displayed on the display unit 345 in accordance with manipulation of the direction key 350b.

If the image information on the position where the forward direction icon (icon 1) or the backward direction icon (icon 2) is currently positioned is selected so as to perform deleting or magnifying function, etc., the control unit 360 adaptively performs the corresponding function. Specifically, the image information corresponding to the position of the forward direction icon (icon 1) or the backward direction icon (icon 2) is in an active state.

The main storing unit 355, which is a non-volatile memory such as EEPROM, stores diverse control programs related to performing the functions of the control unit 360.

The control unit 360 adaptively controls entire activities of the DSC 300 after receiving the signals applied from the command applying unit 350 through selection of key input and/or by the user, as well as the diverse control programs stored in the main storing unit 355 and the automatic control data of the signal processing unit 315.

The operation of the control unit 360 will now be described in further detail. For the sake of clarity, the image relating to the location of an initial icon is referred to as present image information, the image relating to the location after the present image information is referred to as next image information, and the image relating to the location before the present image information is referred to as previous image information. Also, the direction of selecting the next image information from the present image information is referred to as a forward direction, while the direction of selecting the previous image information from the present image information is referred to as a backward direction.

In the case where multi-mode has been selected through manipulation of the mode selection unit 350a, and if the direction of the next image information (e.g., image 3) is selected from the present image information (e.g., image 2), or if the direction of the previous image information (e.g., image 1) is selected from the present image information (image 2) by the direction key 350b, the control unit 360 displays the forward direction icon (icon 1) or the backward direction icon (icon 2) stored in the second storing unit 335, respectively, on the display unit 345 in accordance with the signal applied from the direction key 350b. Through the manipulation of the direction key 350b, the user knows not only the location of the image information, but also the moving direction.

The moving direction may be indicated by diverse cursors of indicating different directions that are stored in the second storing unit 335 (e.g., ' 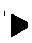 ', ' 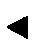 ' etc.) Otherwise, it is also possible to control the graphic processing unit 340 so that a single cursor indicating a single direction can be stored, and that a moving direction such as a forward direction or a backward direction can be indicated by rotating the cursor over a predetermined angle when realised on the display unit 345.

If the multi-mode is selected by manipulation of the mode selection unit 350a, initial multi-screens, as shown in Figure 4(a), are realised in the display unit 345. The forward direction icon (icon 1) is displayed on a lower tip of the present image information on the initial multi-screens. Here, if the active image information is changed to the next image information (image 3) from the present image information (image 2) by manipulation of the direction key 350b, i.e., if a command signal to move forward is applied, the control unit 360 controls the graphic processing unit 340 so that the forward direction icon (icon 1) can be displayed on the position as shown in Figure 4(b). Here, the forward direction icon (icon 1) is displayed in the shape of " 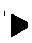 " to indicate not only the current position of the forward direction icon(icon 1) but also the moving direction of the forward direction icon (icon 1).

Meanwhile, if the previous image information (image 1) becomes active by manipulation of the direction key 350b under the state as shown in Figure 4(b), i.e., if a command signal to move backward is applied, the control unit 360 controls the graphics processing unit 340 so that the backward direction icon (icon 2) can be displayed on the position as shown in Figure 4(c). Here, the backward direction icon (icon 2) is displayed in the shape of " 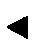 " to indicate not only the current position but also the moving direction by way of the backward direction icon (icon 2).

The forward direction icon (icon 1) or the backward direction icon (icon 2) as displayed by manipulation of the direction key 350b can be realised not only in the multi-mode but also in the single mode. In other words, the graphics processing unit 340 synthesises the image information to be displayed using essentially the entire surface of the display unit 345, along with the forward direction icon (icon 1) or the backward direction icon (icon 2). Detailed description of the related operation is omitted herein since it is similar to operation in the multi-mode.

Further detailed description will now be provided on the operation of the control unit 360 when power has been supplied to the DSC 300.

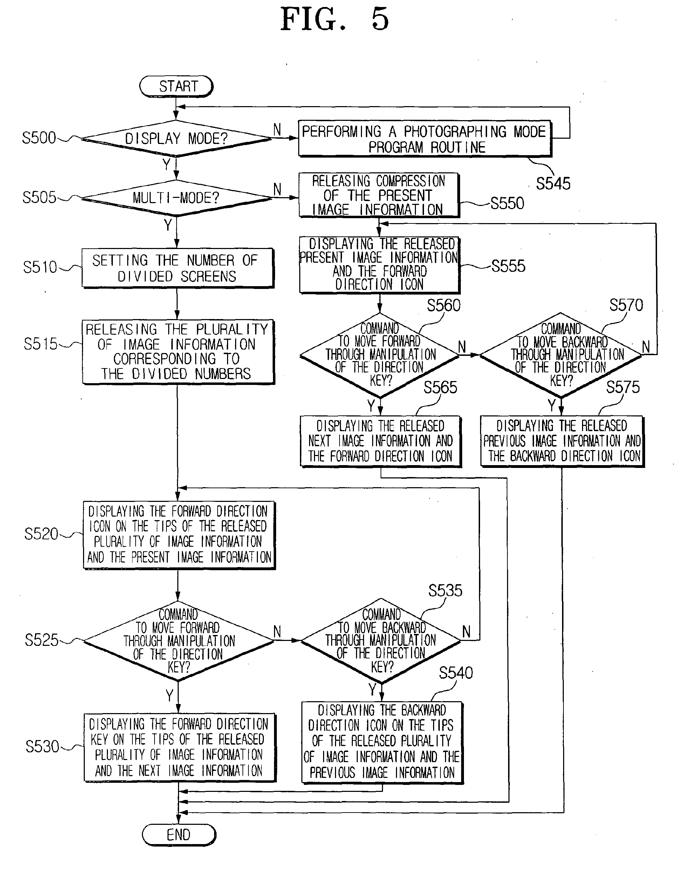

Figure 5 is a flowchart illustrating a method of controlling a screen display with respect to the DSC in Figure 3.

Referring to Figure 4 and 5, if power is applied, the control unit 360 determines whether the mode is in a photographing mode for photographing an object or in a display mode for displaying the image information, which has been stored in the first storing unit 330, on the display unit 345 (S500).

If determined to be in a display mode in step S500, the control unit 360 confirms the selected screen display mode (S505). The screen display mode is classified into a single mode and a multi-mode. The mode is selectable and changeable with the mode selection unit 350a provided in the command applying unit 350.

If a multi-mode is confirmed in step S505, the control unit 360 sets a number of the divided screens to be displayed on the display unit 345 (S510). The number of the divided screens may be preset in the course of manufacturing the DSC 300 or changeable by a separate manipulation button (not shown).

The embodiment exemplifies a case of simultaneously displaying six image information by dividing the entire surface of the display unit 345 by six.

Once the number of the divided screens is set, the control unit 360 controls the codec unit 325 so as to read out a plurality of image information (image 1 to image 6) corresponding to the number of the divided screens from the first storing unit 330. The control unit 360 then releases the compression image formation (S515). In the illustrated embodiment, the plurality of image information (image 1 to image 6) is maximally six image information, including the previous/present/next image information (e.g., images 1, 2, and 3).

The control unit 360 generates and synthesises the plurality of image information released by the graphics processing unit or graphics engine 340 and forward direction icon stored in the second storing unit 335 into displayable image data so as to be displayed on the display unit 345 as shown in Figure 4(a) (S520).

If a command signal to move forward is applied by manipulation of the direction key 350b (S525), the control unit 360 controls the graphic processing unit 340 so that the forward direction icon (icon1) can be displayed on the lower tip of the next image information (image 3) as shown in Figure 4(b) (S530).

Also, if a command signal to move backward is applied by manipulation of the direction key 350b (S535), the control unit 360 controls the graphic processing unit 340 so that the backward direction icon (icon2) can be displayed on the lower tip of the present image information (image2), which is a preceding image information of the next image information (image3) as shown in Figure 4(c) (S540).

Meanwhile, if a mode is determined to be a photographing mode in step S500, the control unit 360 performs a photographing program routine (S545). To be specific, an image signal of an object inputted through the lens group 305 is transformed into an electric image signal through the photographing unit 310 and the signal processing unit 315. If a command to store the signal is applied from the command applying unit 350, the electric image signal is compressed and stored in the first storing unit 330.

Meanwhile, if a single mode is confirmed in step S505, the control unit 360 controls the codec unit 325, and reads out a predetermined image information, i.e., the present image information (not shown) to be displayed on the display unit 345, from the first storing unit 330. The control unit 360 then releases compression of the present image information (not shown) (S550).

Thereafter, the control unit 360 generates the present image information (not shown) released by the graphic processing unit 340 and the forward direction icon (icon1) stored in the second storing unit 335 into displayable image data, synthesises the generated displayable image data, and displays the image data on the display unit 345 (S555).

If a command signal to move forward by manipulation of the direction key 350b (S560), the control section 360 releases compression of the next image information (not shown) so as to be displayed on the display unit 345 together with the forward direction icon (icon1). (S565). Also, if a command to move backward is applied by manipulation of the direction key 350b (S570), the control unit 360 releases compression of the previous image information (not shown) so as to be displayed on the display unit 345 together with the backward direction icon (icon2) (S575).

In the method of controlling the DSC 300 as described above, the forward direction icon (icon1) is displayed in steps S530 and S565 in accordance with the command signal to move forward, while the backward direction icon (icon2) is displayed in steps S540 and S575 in accordance with the command signal to move backward. This enables the user to easily obtain the displaying and moving direction through manipulation of the direction key 350b.

Also, the display control of the moving direction of the icon as described above is applicable not only to the DSC 300 but also to any apparatus that can realise multi-screens. An example is a combo-type photographing apparatus, which integrates the DSC 300 with a digital video camera.

The method of controlling the DSC 300 described above exemplifies realisation of multi-screens for still images. However, the above method is also applicable to realising active images on multi-screens if the recording medium of storing the active images has a large capacity.

The digital image device and the controlling method thereof according to the present invention has advantageous effects of enabling the user to easily discern the moving direction between image information due to adaptable display of a forward direction or a backward direction in accordance with the moving direction between the located image information, particularly in the case where a single screen has been divided into multi-screens and a plurality of image information is displayed.

While the invention has been shown and described with reference to certain preferred embodiments thereof, it will be understood by those skilled in the art that various changes in form and details may be made therein without departing from the spirit of the invention as defined by the appended claims.

## Claims

1. A device (300) for generating digital images, comprising:
at least one memory device (355) for storing digital images and at least one direction icon;
a user input device (350) for receiving commands to retrieve selected ones of the digital images from said memory device for display;
a display device (345) for displaying digital images; and
a processing device (360) connected to said memory device, said user input device and said display device,
the processing device (360) being programmed to control the retrieval of at least one of the digital images and said direction icon from said memory device (355) for display via said display device (345) in response a command, to control the sequential display of the digital images in said memory device on said display device, and to configure the display of said icon to move to the next digital image in the sequence,
**characterised in that** the processing device (360) is programmed to indicate one of a forward direction and a backward direction depending on whether said command selected the next digital image or the previous digital image, respectively, in the sequential display of the digital images.

2. A device as claimed in claim 1, wherein said user input device comprises a forward image display direction selector and a backward image display direction selector for selecting, respectively, the next image and the digital image in the sequence.

3. A device as claimed in claim 1 or claim 2, wherein said user input device comprises a selector (350a) for selecting a single mode or multi-mode of operation corresponding, respectively, to the display of a single image and the display of multiple images on said display screen.

4. A device as claimed in any preceding claim, wherein said display device is operable to display multiple ones of the digital images.

5. A device as claimed in claim 4, wherein said multiple digital images are displayed in sequential order.

6. A device as claimed in claim 5, wherein said processing device is programmable to move said icon to corresponding one of said multiple digital images as they are selected via commands and to configure the direction of said icon to indicate a forward or backward direction depending on whether the next selected one of said multiple displayed images is the next or previous digital image in the sequence.

7. A device as claimed in any preceding claim, wherein said icon comprises forward and backward direction icons that are selectively displayed.

8. A device as claimed in any of claims 1 to 6, wherein said processing device is programmed to selectively rotate said icon.

9. A method of controlling the display of digital images on a display (345) of a device (300) operable to provide a sequential display of digital images, the method comprising the steps of:
receiving a first user command to select and display an image;
displaying said first image on the display screen (345);
displaying an icon proximally to said first image on the display screen to indicate that said image is the selected image; and
receiving a second user command to select a second image in the sequence;
**characterised by** displaying said icon proximally to said second image that indicates a forward direction or a backward direction depending on whether said second user command selects the next image or the previous image in the sequence.

10. A method as claimed in claim 9, comprising displaying a plurality of images simultaneously on the display screen, and moving said icon from said first image to said second image.

11. A method as claimed in claim 10, further comprising receiving a user command selecting single or multi-mode operation, and displaying one or more images simultaneously on the display screen (345) as appropriate.

12. A method as claimed in claim 9, wherein said displaying comprises:
storing a forward icon and a backward icon; and
selecting and displaying one of the icons depending on whether said second user command selected the next or the previous image.

13. A method as claimed in any of claims 9 to 11, wherein said displaying comprises:
storing a single icon indicating a direction; and
rotating and displaying said single icon to indicate one of a forward direction and a backward direction depending on whether said second user command selected the next or the previous image.

14. A digital image device for generating digital images, the digital image device comprising:
at least one memory device for storing the digital images and at least one icon for indicating image display direction;
a user input device for receiving user input commands comprising commands to retrieve selected ones of the digital images from said memory device for display;
a display device for displaying at least one of the digital images on a display screen; and
a processing device connected to said memory device, said user input device and said display device, and programmable to control the retrieval of at least one of the digital images and said icon from said memory device for display via said display device in response to one of said commands, to control the sequential display of the digital images in said memory device via said display device, and to configure the display of said icon to move to the next digital image in the sequential display of the digital images that is selected via one of said commands and to indicate one of a forward direction and a backward direction depending on whether said command selected the next digital image and the previous digital image, respectively, in the sequential display of the digital images.

15. A digital image device as claimed in claim 14, wherein said user input device comprises a forward image display direction button and a backward image display direction button for selecting, respectively, the next digital image and the previous digital image in the sequential display of the digital images.

16. A digital image device as claimed in claim 14, wherein said user input device comprises a button for selecting a single mode or multi-mode of operation corresponding, respectively, to the display of a single digital image on said display screen, or the display of multiple digital images simultaneously on said display screen.

17. A digital image device as claimed in claim 14, wherein said display device is operable to display multiple ones of the digital images simultaneously on said display screen

18. A digital image device as claimed in claim 17, wherein said multiple digital images are displayed in sequential order on said display screen

19. A digital image device as claimed in claim 18, wherein said processing device is programmable to move said icon to corresponding one of said multiple digital images as they are selected via said commands and to configure the direction of said icon to indicate one of the forward direction and the backward direction depending on whether the next selected one of said multiple displayed images is the next or previous digital image in the sequential order

20. A digital image device as claimed in claim 14, wherein said at least one icon for indicating image display direction stored in said memory device comprises a forward direction icon and a backward direction icon that are selectively controlled by said processing device to be displayed proximally to a selected one of the digital images being displayed via said display device depending on whether said command selected the next digital image and the previous digital image, respectively, in the sequential display of the digital images.

21. A digital image device as claimed in claim 14, wherein said processing device is programmable to selectively rotate said at least one icon for indicating image display direction on said display screen to indicate a forward direction icon and a backward direction icon depending on whether said command selected the next digital image and the previous digital image, respectively, in the sequential display of the digital images.

22. A method of controlling the display of digital images on the display screen of a digital image device, the digital image device being operable to provide a sequential display of digital images, the method comprising the steps of:
receiving a first user command to select and display at first one of the digital images;
displaying said first digital image on the display screen;
displaying an icon proximally to said first digital image on the display screen to indicate that said first digital image is the selected image;
receiving a second user command to select a second one of the digital images in the sequential display; and
displaying said icon proximally to said second digital image that indicates a forward direction or a backward direction depending on whether said second user command selected the next digital image or the previous digital image, respectively, in the sequential display of the digital images as said second digital image.

23. A method of controlling the display of digital images as claimed in claim 22, wherein the digital image device is operable to display a plurality of the sequential display of digital images simultaneously on the display screen, said simultaneously displayed digital images comprising at least said first digital image and said second digital image, and further comprising the step of moving said icon from said first digital image to said second digital image.

24. A method of controlling the display of digital images as claimed in claim 23, further comprising the step of receiving a third user command to select one of a single mode and a multi-mode operation, the digital image device being operable to display one of the digital images on the display screen when in the single mode and to display a plurality of the digital images simultaneously on the display screen when in the multi-mode.

25. A method of controlling the display of digital images as claimed in claim 22, wherein said displaying steps for displaying said icon comprise the steps of:
storing a forward icon and a backward icon; and
selecting and displaying one of said forward icon and said backward icon depending on whether said first user command selected the next digital image or the previous digital image, respectively, in the sequential display of the digital images.

26. A method of controlling the display of digital images as claimed in claim 22, wherein said displaying steps for displaying said icon comprise the steps of:
storing a single icon indicating a direction; and
rotating and displaying said single icon to indicate one of a forward direction and a backward direction depending on whether said first user command selected the next digital image or the previous digital image, respectively, in the sequential display of the digital images.
